(19) Europäisches Patentamt
European Patent Office
Office européen des brevets

(11) **EP 1 530 312 B1**

(12) **EUROPEAN PATENT SPECIFICATION**

(45) Date of publication and mention
of the grant of the patent:
**23.05.2007 Bulletin 2007/21**

(51) Int Cl.:
***H04L 1/06*** *(2006.01)*

(21) Application number: **04026380.8**

(22) Date of filing: **05.11.2004**

(54) **Apparatus and method for cancelling interference signals in a system using multiple antennas**

Vorrichtung und Verfahren zur Unterdrückung von Interferenzsignalen in einem System mit mehreren Antennen

Dispositif et méthode pour la suppression de signaux parasites dans un système utilisant plusieurs antennes

(84) Designated Contracting States:
**DE FI FR GB IT SE**

(30) Priority: **05.11.2003 KR 2003078133**

(43) Date of publication of application:
**11.05.2005 Bulletin 2005/19**

(73) Proprietor: **SAMSUNG ELECTRONICS CO., LTD.**
**Suwon-si,**
**Gyeonggi-do (KR)**

(72) Inventors:
• **Hwang, Chan-Soo,**
**Samsung Electronics Co., Ltd.**
**Suwon-si,**
**Gyeonggi-do (KR)**
• **Song, Kee-Bong,**
**Samsung Electronics Co., Ltd.**
**Suwon-si,**
**Gyeonggi-do (KR)**
• **Lee, Dong-Jun,**
**Samsung Electronics Co., Ltd.**
**Suwon-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A1- 2003 021 355       US-A1- 2003 103 584**

• **WONG Y F M ET AL: "Analysis of wireless multimedia DS/CDMA system with hybrid ARQ, diversity and power control" 18 May 1998 (1998-05-18), VEHICULAR TECHNOLOGY CONFERENCE, 1998. VTC 98. 48TH IEEE OTTAWA, ONT., CANADA 18-21 MAY 1998, NEW YORK, NY, USA,IEEE, US, PAGE(S) 2197-2201 , XP010288183 ISBN: 0-7803-4320-4 * figure 1 ***

**Description**

The present invention relates generally to a MIMO (Multi-Input Multi-Output multiple antenna OFDM (Orthogonal Frequency Division Multiplexing) mobile communication system, and in particular, to an apparatus and method for improving the performance of an error correction code for correcting errors resulting from the effects of error propagation.

A signal transmitted on a radio signal experiences multipath interference due to a variety of obstacles between a transmitter and a receiver. The characteristics of the multipath radio channel are determined by a maximum delay spread and signal transmission period. If the transmission period is longer than the maximum delay spread, no interference occurs between successive signals and the radio channel is characterized in the frequency domain as a frequency non-selective fading channel. However, the transmission period is shorter than the maximum delay spread at wideband high-speed transmission. As a result, interference occurs between successive signals and a received signal is subject to intersymbol interference (ISI). The radio channel is characterized in the frequency domain as a frequency selective fading channel. In the case of single carrier transmission using coherent modulation, an equalizer is required to cancel the ISI. Also, as data rate increases, ISI-incurred distortion increases and the complexity of the equalizer in turn increases. To solve the equalization problem in the single carrier transmission scheme, OFDM was proposed.

In general, OFDM is defined as a two-dimensional access scheme of time division access and frequency division access in combination. An OFDM symbol is distributedly transmitted over subcarriers in a predetermined number of subchannels.

In OFDM, the spectrums of subchannels orthogonally overlap with each other, having a positive effect on spectral efficiency. Also, implementation of OFDM modulation/demodulation by IFFT (Inverse Fast Fourier Transform) and FFT (Fast Fourier Transform) allows efficient digital realization of a modulator/demodulator. OFDM is robust against frequency selective fading or narrow band interference, which renders OFDM effective as a transmission scheme for European digital broadcasting and for high-speed data transmission adopted as the standards of large-volume wireless communication systems such as IEEE 802.11a, IEEE 802.16a and IEEE 802.16b.

OFDM is a special case of MCM (Multi-Carrier Modulation) in which an input serial symbol sequence is converted to parallel symbol sequences and modulated to multiple orthogonal sub-carriers, prior to transmission.

The first MCM systems appeared in the late 1950's for military high frequency (HF) radio communication, and OFDM with overlapping orthogonal sub-carriers was initially developed in the 1970's. In view of orthogonal modulation between multiple carriers, OFDM has limitations in actual implementation for systems. In 1971, Weinstein, et. al. proposed an OFDM scheme that applies DFT (Discrete Fourier Transform) to parallel data transmission as an efficient modulation/demodulation process, which was a driving force behind the development of OFDM. Also, the introduction of a guard interval and a cyclic prefix as the guard interval further mitigates adverse effects of multi-path propagation and delay spread on systems. As a result, OFDM has widely been exploited for digital data communications such as digital audio broadcasting (DAB), digital TV broadcasting, wireless local area network (WLAN), and wireless asynchronous transfer mode (WATM). Although hardware complexity was an obstacle to the wide use of OFDM, recent advances in digital signal processing technology including FFT and IFFT enable OFDM to be implemented. OFDM, similar to FDM (Frequency Division Multiplexing), boasts of optimum transmission efficiency in high-speed data transmission because it transmits data on sub-carriers, maintaining orthogonality among them. The optimum transmission efficiency is further attributed to good frequency useleading to efficiency and robustness against multipath fading in OFDM. In particular, overlapping frequency spectrums lead to efficient frequency use and robustness against frequency selective fading and multipath fading. OFDM reduces the effects of ISI by use of guard intervals and facilitates the design of a simple equalizer hardware structure. Furthermore, since OFDM is robust against impulse noise, it is increasingly popular in communication systems.

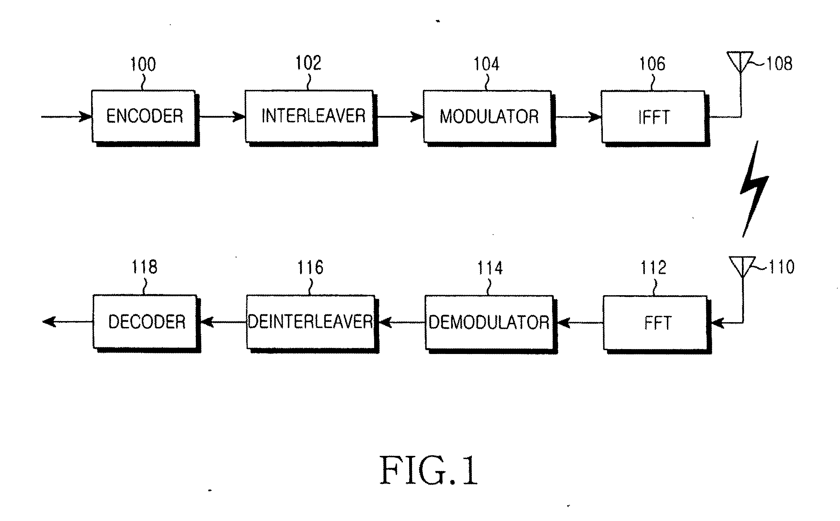

FIG. 1 is a block diagram of a typical OFDM mobile communication system. Referring to FIG. 1, an encoder 100 encodes binary input bits and outputs coded bit streams. An interleaver 102 interleaves the serial coded bit streams and a modulator 104 maps the interleaved bit streams to symbols on a signal constellation QPSK (Quadrature Phase Shift Keying), 8PSK (8ary Phase Shift Keying), 16QAM (16ary Quadrature Amplitude Modulation) or 64QAM (64ary QAM) has been adopted as a modulation scheme in the modulator 104. The number of bits in one symbol is determined in correspondence with the modulation scheme used. A QPSK modulation symbol includes 2 bits, an 8PSK modulation symbol 3 bits, a 16QAM modulation symbol 4 bits, and a 64QAM modulation scheme 6 bits. An IFFT 106 processor IFFT-processes the modulated symbols and transmits the IFFT signal through a transmit antenna 108.

A receive antenna 110 receives the symbols from the transmit antenna 108. An FFT processor 112 FFT-processes the received signal and a demodulator 114, having the same signal constellation as used in the modulator 104, converts despread symbols to binary symbols in a demodulation scheme. The demodulation scheme is determined in correspondence with the modulation scheme. A deinterleaver 116 deinterleaves the demodulated binary bit streams in a deinterleaving method corresponding to the interleaving method of the interleaver 102. A decoder 118 decodes the interleaved binary bit streams.

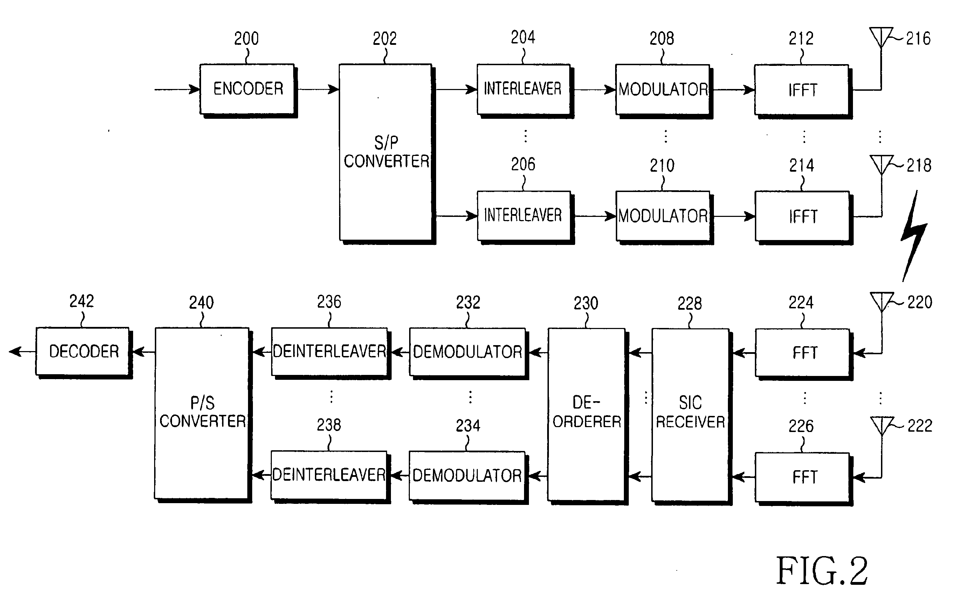

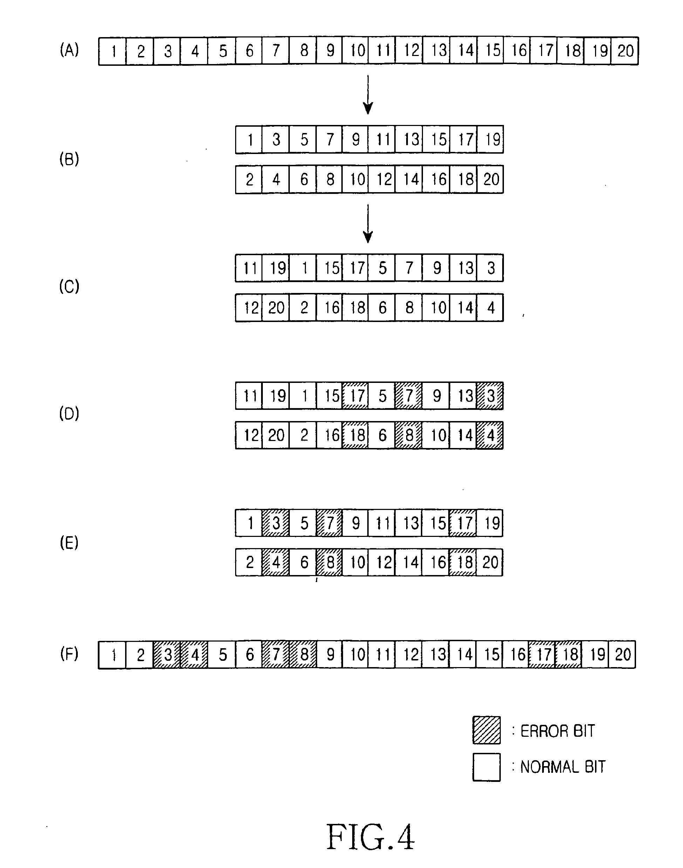

FIG. 2 is a block diagram of an OFDM mobile communication system using multiple transmit/receive antennas for data transmission/reception. Referring to FIG. 2, an encoder 200 encodes binary input bits and outputs a coded bit stream. A serial-to-parallel (S/P) converter 202 converts the serial coded bit stream into parallel coded bit streams, which will be described later with reference to FIG. 4. The parallel bit streams are provided to interleavers 204 to 206. The interleavers 204 to 206, modulators 208 to 210, IFFTs 212 to 214, and transmit antennas 216 to 218 operate in the same manner as their respective counterparts 102, 104, 106 and 108 illustrated in FIG. 1, except that due to the use of multiple transmit antennas, the number of subcarriers assigned to each IFFT is less than the number of subcarriers assigned to the IFFT 106 illustrated in FIG. 1.

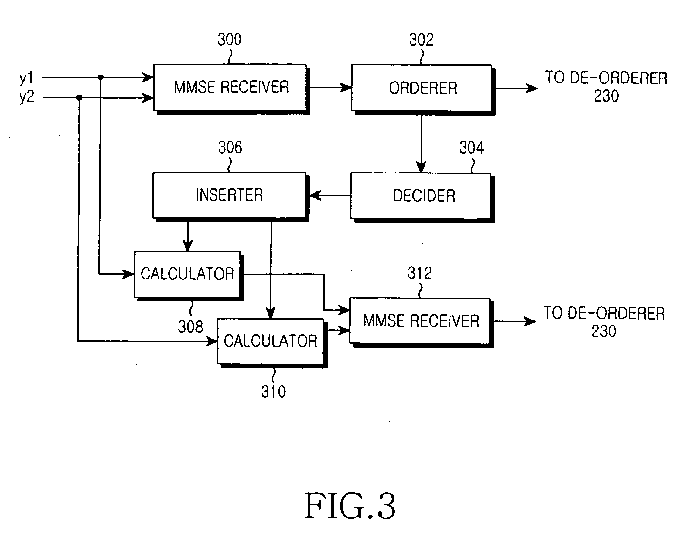

Receive antennas 220 to 222 receive symbols from the transmit antennas 216 to 218. FFTs 224 to 226 FFT-process the received signal and output FFT signals to a successive interference cancellation (SIC) receiver 228. The operation of the SIC receiver 228 will be described with reference to FIG. 3. The output of the SIC receiver 228 is applied to a de-orderer 230. The SIC receiver 228 first detects a stream in a good reception state and then detects another stream using the detected stream. Because the SIC receiver 228 determines which stream is in a better reception state, a detection order is different from the order of transmitted signals. Therefore, the de-orderer 230 de-orders the transmitted signals according to their reception states. Demodulators 232 to 234 and deinterleavers 236 to 238 process the de-ordered symbols in the same manner as the demodulator 114 and the deinterleaver 116 illustrated in FIG. 1. A parallel-to-serial (P/S) converter 240 converts the parallel deinterleaved bit streams to a serial binary bit stream, which will be described with reference to FIG. 4. A decoder 242 decodes the binary bit stream.

Signals transmitted from the different transmit antennas are received linearly overlapped at the receive antennas in the multiple antenna system. Hence, as the number of the transmit/receive antennas increases, decoding complexity increases. The SIC receiver uses low-computation linear receivers repeatedly to reduce the decoding complexity. The SIC receiver achieves gradually improved performance by canceling interference in a previous decoded signal. Yet, the SIC scheme has a distinctive shortcoming in that errors generated in the previous determined signal are increased in the current stage. Referring to FIG. 3, the structure of the SIC receiver will be described. The SIC receiver receives signals through two receive antennas by way of example. In FIG. 3, the signals received through the two receive antennas are $y_1$ and $y_2$, as set forth in Equation (1):

$$y_1 = x_1 h_{11} + x_2 h_{12} + z_1$$

$$y_2 = x_1 h_{21} + x_2 h_{22} + z_2$$

$$\ldots \ldots (1)$$

As noted from Equation (1), two transmit antennas transmit signals. In Equation (1), $x_1$ and $x_2$ are signals transmitted from first and second transmit antennas, respectively, $h_{11}$ and $h_{12}$ are a channel coefficient between the first transmit antenna and a first receive antenna and a channel coefficient between the second transmit antenna and the first receive antenna, respectively, $h_{21}$ and $h_{22}$ are a channel coefficient between the first transmit antenna and a second receive antenna and a channel coefficient between the second transmit antenna and the second receive antenna, respectively, and $z_1$ and $z_2$ are noise on radio channels.

An MMSE (Minimum Mean Square Error) receiver 300 estimates $x_1$ and $x_2$ from $y_1$ and $y_2$. As described earlier, the SIC receiver 228 estimates the signals transmitted from the transmit antennas in a plurality of stages. The SIC receiver first estimates a signal transmitted from one transmit antenna (the first transmit antenna) and then a signal transmitted from the other transmit antenna (the second transmit antenna) using the estimated signal. In the case of three transmit antennas, the SIC receiver further estimates a signal transmitted from a third transmit antenna using the estimates of the transmitted signals from the first and second transmit antennas. The signals received at the MMSE receiver from the first and second receive antennas are shown in Equation (2):

$$\dot{y}_1 = x_1 h_{11} + z_3$$

$$y_2 = x_1 h_{21} + z_4$$

$$\ldots\ldots (2)$$

As noted from Equation (2), the MMSE receiver 300 estimates the signal transmitted from the second antenna as noise. By Equation (1) and Equation (2), Equation (3) is derived as follows:

$$z_3 = x_2 h_{12} + z_1$$

$$z_4 = x_2 h_{22} + z_2$$

$$\ldots\ldots (3)$$

While the transmitted signal from the second transmit antenna is estimated as noise in Equation (2), the transmitted signal from the first transmit antenna can be estimated as noise, instead. In this case, as shown in Equation (4),

$$y_1 = x_2 h_{12} + z_5$$

$$y_2 = x_2 h_{22} + z_6$$

$$\ldots\ldots (4)$$

The MMSE receiver 300 estimates the transmitted signal $x_1$ using Equation (2) according to Equation (5):

$$E = |Ay - x_1|^2$$

$$\ldots\ldots (5)$$

where y is the sum of $y_1$ and $y_2$. Using Equation (5), $x_1$ having a minimum E is achieved. Therefore, the estimates $\tilde{x}_1$ of $x_1$ is calculated according to equation (6):

$$\tilde{x}_1 = Ay$$

$$\ldots\ldots (6)$$

In the same manner, $x_2$ can be estimated. A stream orderer 302 prioritizes the estimates of $x_1$ and $x_2$ according to their MMSE values. That is, it determines a received signal having minimum errors on a radio channel based on the MMSE values. In the case illustrated in FIG. 3, $x_1$ has less errors than $x_2$.

The stream orderer 302 provides $\tilde{x}_1$ to the de-orderer illustrated in FIG. 2 and a decider 304. The decider 304 decides the values of the estimated bits. Because the MMSE receiver 300 estimates the transmitted signals simply based on mathematical calculation, the estimates may be values that cannot be available for transmission. Therefore, the decider 304 decides an available value for transmission in the transmitter using the received estimate, and outputs the value to an inserter 306. If no errors occur on the radio channel, the estimate is identical to the decided value. The inserter 306 provides the decided $\tilde{x}_1$ to calculators 308 and 310. The calculators 308 and 310 estimate the received signals $y_1$ and $y_2$ according to Equation (7):

$$\bar{y}_1 = \hat{x}_1 h_{11} + x_2 h_{12} + z_1$$

$$\bar{y}_2 = \hat{x}_1 h_{21} + x_2 h_{22} + z_2$$

$$\ldots\ldots (7)$$

An MMSE receiver 312 estimates the signal transmitted from the second transmit antenna using the estimated received signals according to Equation (8):

$$E = \left| B\bar{y} - x_2 \right|^2$$

$$\ldots\ldots (8)$$

where $\tilde{y}$ is the sum of $\tilde{y}_1$ and $\tilde{y}_2$. By Equation (8), $x_2$ resulting in a minimum E is achieved. Thus, an estimate $\tilde{x}_2$ of $x_2$ is calculated according to Equation (9):

$$\bar{x}_2 = B\bar{y}$$

$$\ldots\ldots (9)$$

and $x_2$ is provided to the de-orderer 230 illustrated in FIG. 2.

As described above, the SIC receiver 228 estimates another transmitted signal in a current stage using a transmitted signal estimated in the previous stage. If the transmitted signals are interleaved in the same interleaver prior to transmission and errors are generated in a particular bit during transmission, the receiver determines that its adjacent bits as well as the particular bit have errors. Now a description will be made of error generation in a signal received at a receiver from a transmitter with reference to FIG. 4.

Referring to FIG. 4, reference character (A) denotes a binary bit stream including 20 bits to be transmitted. The bit stream is expressed bit by bit. Reference character (B) denotes two groups of bits separated from the 20-bit stream by the S/P converter. A first group includes odd-numbered bits and a second group includes even-numbered bits. Reference character (C) denotes the two groups of bits interleaved by the interleavers. Both groups are interleaved in the same interleaving method.

Reference character (D) denotes bits having errors, #17, #7 and #3 in the first group during transmission, received at the receiver. Because the bits of the second group are estimated using estimates of the bits of the first group, the second group has errors in the same bit positions as in the first group. Thus, bits #18, #8 and #4 have errors in the second group.

Reference character (E) denotes deinterleaving of the received signal by the deinterleavers. Reference character (F) denotes parallel-to-serial conversion of the deinterleaved bit streams. As indicated by (F), errors have occurred in adjacent bits. This implies that error correction performance is degraded in the receiver due to the nature of the SIC receiver. While using different interleaving patterns for different transmit antennas has been proposed as a way to overcome this problem, this scheme has drawbacks in that interleaving time is increased for each transmit antenna and the interleaving pattern of each transmit antenna must be known to the receiver. Thus, a method of solving the problem is discussed hereinbelow.

Wong, Y. F. M. et al: "Analysis of wireless multimedia DS/CDMA system with hybrid ARQ, diversity and power control" 18 May 1998, Vehicular Technology Conference, 1998. VTC 98. 48th IEEE Ottawa, Ont., Canada 18 to 21 May 1998, New York, USA, IEEE, US, pages 2197 to 2201, refers to an analysis of wireless multimedia DS/CDMA system with hybrid ARQ, diversity and power control. The described system is based on different error control schemes and an optimal power control algorithm for a wireless personal communication service. The error correction control system consists of FEC, diversity and ARQ. Since a multimedia system is required to support services with different rates and QoS, different error control schemes are used to satisfy the requirement of different media. Furthermore, the paper presents numerical results over multi-path Rayleigh fading channels, which show how optimization can increase the capacity and decrease the total transmission power in a multimedia CDMA system.

US 2003/103584 A1 refers to a method and system for transmitting and receiving signals in a mobile communication system which uses a plurality of antennas. The described signal transmitting method that transmits a signal through a plurality of antennas includes separating by layers and primarily encoding input data for an independent signal generation, interleaving in space and time the primarily encoded data of the respective layers, receiving and secondarily encoding the interleaved data, and transmitting the secondarily encoded data through the plurality of antennas.

It is therefore an object of the present invention to provide an improved apparatus for encoding information bits to coded bit stream, for transmitting signals through a plurality of transmit antennas in a mobile communication system and the respective method thereof which minimizes the increase of the delay caused by the interleaving as the antenna number is increased and reducing a performance degradation of an error correction code according to an error propagation of MIMO successive interference cancellation receiver.

This object is solved by the present invention and in particular by the subject matter of the independent claims. Preferred embodiments are subject matter of the dependent claims.

An aspect of the present invention is to substantially solve at least the above problems and/or disadvantages and to provide at least the advantages below.

An aspect of the present invention is to provide a bit-by-bit interleaving pattern that offers excellent error correction performance.

An aspect of the present invention is to provide, in a system that detects information in a current stage using information detected in a previous stage, an apparatus and method for reducing the effect of errors in the previous detected information on the current information detection.

The above object and aspects are achieved by providing an apparatus and method for transmitting/receiving signals through a plurality of transmit/receive antennas in a mobile communication system.

According to one aspect of the present invention, in an apparatus having an encoder for encoding information bits to a coded bit stream, for transmitting signals through a plurality of transmit antennas in a mobile communication system, a serial-to-parallel converter converts the coded bit stream to a plurality of coded bit streams according to the number of the transmit antennas, an interleaver interleaves the coded bit streams, stream by stream, a plurality of modulators modulate the interleaved coded bit streams to a plurality of modulation symbol sequences, and a plurality of shifters shift the modulation symbol sequences in different patterns and transmit the shifted modulation symbol sequences through the respective transmit antennas.

According to another aspect of the present invention, in an apparatus having a decoder for decoding a coded bit stream to information bits, for receiving signals through a plurality of receive antennas in a mobile communication system, a plurality of shifters shift modulation symbol sequences received through the receive antennas in the same patterns as used in a transmitting apparatus, a plurality of demodulators demodulate the shifted modulation symbol sequences to a plurality of coded bit streams, a plurality of deinterleavers deinterleave the coded bit streams, respectively, and a parallel-to-serial converter converts the deinterleaved coded bit streams to one coded bit stream.

According to a further aspect of the present invention, in a method of transmitting signals through a plurality of transmit antennas in a mobile communication system having an encoder for encoding information bits to a coded bit stream, the coded bit stream is converted to a plurality of coded bit streams according to the number of the transmit antennas. The coded bit streams are interleaved, stream by stream and modulated to a plurality of modulation symbol sequences. The modulation symbol sequences are shifted in different patterns and transmitted through the respective transmit antennas.

According to still another aspect of the present invention, in a method of receiving signals through a plurality of receive antennas in a mobile communication system having a decoder for decoding a coded bit stream to information bits, modulation symbol sequences received through the receive antennas are shifted in the same patterns as used in a transmitting apparatus, demodulated to a plurality of coded bit streams, deinterleaved, and converted to one coded bit stream.

The above features and advantages of the present invention will become more apparent from the following detailed description when taken in conjunction with the accompanying drawings in which:

FIG. 1 is a block diagram of a typical OFDM mobile communication system;
FIG. 2 is a block diagram of a typical multiple antenna OFDM mobile communication system;
FIG. 3 is a block diagram of an SIC receiver illustrated in FIG. 2;
FIG. 4 sequentially illustrates data transmission and reception in the typical multiple antenna OFDM mobile communication system;
FIG. 5 is a block diagram of a transmitter in a multiple antenna OFDM mobile communication system according to the present invention;

FIG. 6 is a block diagram of a receiver in the multiple antenna OFDM mobile communication system according to the present invention;

FIG. 7 sequentially illustrates data transmission and reception in the multiple antenna OFDM mobile communication system according to the present invention;

FIG. 8 is a graph comparing the present invention with a conventional method; and

FIG. 9 is another graph comparing the present invention with the conventional method.

A preferred embodiment of the present invention will be described herein below with reference to the accompanying drawings. In the following description, well-known functions or constructions are not described in detail since they would obscure the invention in unnecessary detail.

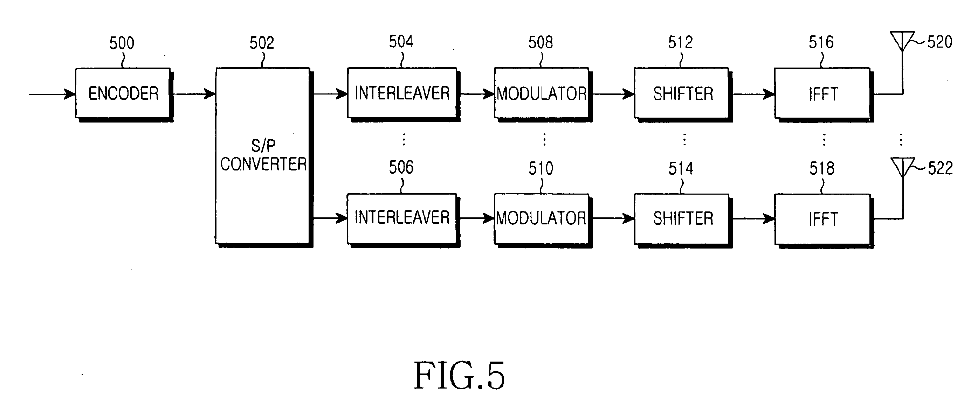

FIG. 5 is a block diagram of a transmitter in a multiple antenna OFDM mobile communication system according to the present invention. Referring to FIG. 5, an encoder 500 encodes input binary bits and outputs a coded bit stream. An S/P converter 502 divides the serial coded bit stream into as many parallel coded bit streams as the number of transmit antennas 520 to 522. Interleavers 504 to 506 interleave the parallel coded bit streams and modulators 508 to 510 map the interleaved coded bits to modulation symbols of QPSK, 8PSK, 16QAM or 64QAM. The number of bits per symbol is determined according to the modulation scheme used. A QPSK modulation symbol has 2 bits, an 8PSK modulation symbol 3 bits, a 16QAM modulation symbol 4 bits, and a 64QAM modulation symbol 6 bits.

Shifters 512 to 514 shift the modulation symbols in different patterns according to the present invention in order to prevent burst errors in the modulation symbols. The shifting of the modulation symbols will be described in connection with the number of the multiple antennas, taken as an example. Given two transmit antennas, one shifter provides a receiver modulation symbol to an IFFT without shifting, and another shifter exchanges an odd-numbered bit with an even-numbered bit in position and transmits the position-changed bits to an IFFT. Table 1 below demonstrates bit shifting in four shifters when four transmit antennas are used.

Table 1

| Input bits | 1 2 3 4 5 6 7 8 9 10 11 12 13 14 15 16 ... |
|---|---|
| First shifter (output bits) | 1 2 3 4 5 6 7 8 9 10 11 12 13 14 15 16 ... |
| Second shifter (output bits) | 2 3 4 1 6 7 8 5 10 11 12 9 14 15 16 13 ... |
| Third shifter (output bits) | 3 4 1 2 7 8 5 6 11 12 9 10 15 16 13 14 ... |
| Fourth shifter (output bits) | 4 1 2 3 8 5 6 7 12 9 10 11 16 13 14 15 ... |

The shifting patterns for the input symbols can be changed according to user selection, i.e. in a different manner from Table 1. IFFTs 516 to 518 IFFT-process the shifted symbols and transmit them through the transmit antennas 520 to 522.

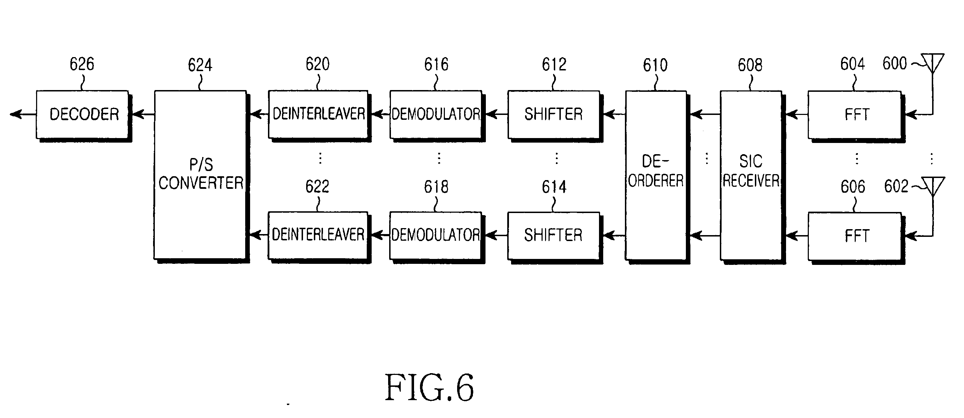

FIG. 6 is a block diagram of a receiver in the multiple antenna OFDM mobile communication system according to the present invention. Referring to FIG. 6, symbols transmitted from transmit antennas are received at receive antennas 600 to 602. FFTs 604 to 606 FFT-process the received symbols. An SIC receiver 608 operates on the FFT symbols in the manner described before. A de-orderer 610 de-orders the output of the SIC receiver 608. Shifters 612 to 614 shift the de-ordered symbols in the following way.

The shifters 612 to 614 rearrange the bits shifted by the shifters illustrated in FIG. 5 in the original order. Table 2 below illustrates an operation of the shifters 612 to 614 in correspondence with the shifting illustrated in Table 1.

Table 2

| Input bits | shifters | Output bits |
|---|---|---|
| 1 2 3 4 5 6 7 8 9 10 11 12 13 14 15 16 ... | First shifter | 1 2 3 4 5 6 7 8 9 10 11 12 13 14 15 16 ... |
| 1 2 3 4 5 6 7 8 9 10 11 12 13 14 15 16 ... | Second shifter | 1 2 3 4 5 6 7 8 9 10 11 12 13 14 15 16 ... |
| 3 4 1 2 7 8 5 6 11 12 9 10 15 16 13 14 ... | Third shifter | 1 2 3 4 5 6 7 8 9 10 11 12 13 14 15 16 ... |
| 4 1 2 3 8 5 6 7 12 9 10 11 16 13 14 15 ... | Fourth shifter | 1 2 3 4 5 6 7 8 9 10 11 12 13 14 15 16 ... |

The shifted symbols are applied to demodulators 616 to 618. The demodulators 616 to 618 convert the despread symbols to binary bits by the same signal constellation as used in the modulators of FIG. 5. The demodulation method depends on the modulation scheme used in the transmitter. Deinterleavers 620 to 622 deinterleave the demodulated binary bit streams in a deinterleaving method in correspondence with the interleaving method used in the interleavers of FIG. 5. A P/S converter 624 converts the deinterleaved bit streams to a serial bit stream. A decoder 626 decodes the binary bit stream and outputs binary information bits.

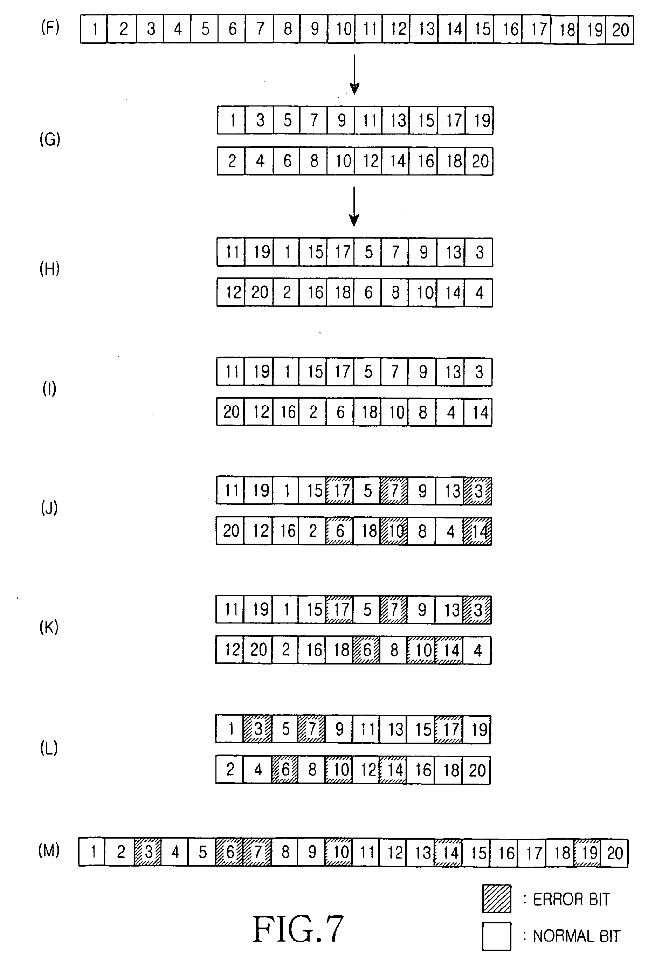

FIG. 7 illustrates data symbol processing in each component of the transmitter and the receiver according to the present invention. The present invention will be compared with the conventional processing illustrated in FIG. 4.

Referring to FIG. 7, reference (F) denotes a binary bit stream including 20 bits, like the transmission data illustrated in FIG. 4. Reference character (G) denotes two groups of bits separated from the 20-bit stream by the S/P converter. A first group includes odd-numbered bits and a second group includes even-numbered bits. Reference character (H) denotes interleaving of the two groups of bits by the interleavers. Both groups are interleaved in the same interleaving method.

Reference character (I) denotes shifting of the bit symbols of either of the two groups. Since data is transmitted through two transmit antennas in the illustrated case, the transmission data is divided into two groups. As described above, the other group is not subject to shifting. As indicated by (I), the shifting is performed on a two-bit basis. That is, the first bit is exchanged with the second bit and the third bit with the fourth bit, in position. The other bits are shifted in the same manner. Since shifting indicated by (I) is given just for illustrative purposes, the shifting can be performed in a different manner.

Reference character (J) denotes bits having errors, #17, #7 and #3 in the first group in the receiver. Because the bits of the second group are estimated using estimates of the bits of the first group, the second group has errors in the same bit positions as in the first group. Thus, bits #6, #10 and #14 have errors in the second group.

Reference character (K) denotes shifting in the shifters of the receiver. The shifting is performed in the reverse order to the shifting done in the transmitter, to thereby rearrange received symbols in the original order before the shifting in the transmitter. That is, the symbols are returned to the original positions by shifting twice, nullifying the effect of the shifting in the transmitter.

Reference character (L) denotes deinterleaving of the received signal by the deinterleavers. Reference character (M) denotes parallel-to-serial conversion of the deinterleaved bit streams. As indicated by (M), errors in adjacent bits are remarkably reduced, compared to (E) illustrated in FIG. 4.

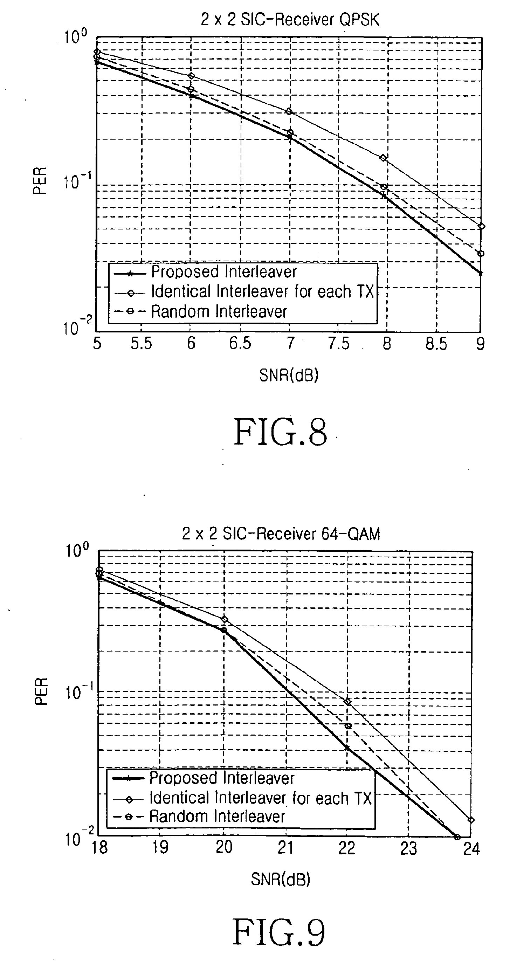

FIGs. 8 and 9 illustrate the effects of the present invention. Specifically, FIG. 8 illustrates the effects of the present invention in the case where QPSK modulation symbols transmitted through two transmit antennas are received through two receive antennas and FIG. 9 illustrates the effects of the present invention in the case where 64QAM modulation symbols transmitted through two transmit antennas are received through two receive antennas. The graphs illustrated in FIGs. 8 and 9 demonstrate that the present invention offers far better performance than the conventional method.

In accordance with the present invention as described above, the influence of errors and interference during data transmission is reduced by minimizing the effects of errors generated in a previous stage on data processing in a current stage. Also, since a plurality of interleavers/deinterleavers interleave/deinterleave in the same manner, a time delay involved in interleaving/deinterleaving is minimized.

While the invention has been shown and described with reference to a certain preferred embodiment thereof, it will be understood by those skilled in the art that various changes in form and details may be made therein without departing from the scope of the invention as defined by the appended claims.

### Claims

**1.** An apparatus having an encoder for encoding information bits to a coded bit stream, for transmitting signals through a plurality of transmit antennas in a mobile communication system, comprising:

a serial-to-parallel converter (502) for converting the coded bit stream to a plurality of coded bit streams according to a number of transmit antennas;
an interleaver (504 to 506) for interleaving each of the coded bit streams, stream by stream, in the same manner;
a plurality of modulators (508 to 510) for modulating each of the interleaved coded bit streams to a plurality of modulation symbol sequences; and
a plurality of shifters (512 to 514) for shifting each of the modulation symbol sequences via shifting bits within the modulation symbol sequences in accordance with patterns being different for the modulation symbol sequences and transmitting each of the shifted modulation symbol sequences through respective transmit antennas.

**2.** The apparatus of claim 1, further comprising an IFFT transformer (516 to 518) for converting each of the shifted modulation symbols to frequency-domain signals to be transmitted on subcarriers via a radio channel.

3. The apparatus of claim 2, wherein the modulators use a modulation scheme in which the coded bit streams are converted to modulation symbols each having as many bits as the number of the transmit antennas.

4. The apparatus of claim 3, wherein the shifters correspond in index numbers to the transmit antennas and sequentially shift the bits of the modulation symbols bit by bit according to the index number of the transmit antenna.

5. An apparatus having a decoder for decoding a coded bit stream to information bits, for receiving signals through a plurality of receive antennas in a mobile communication system, comprising:

a plurality of shifters (612 to 614) for shifting each of modulation symbol sequences received through the receive antennas via shifting bits within the modulation symbol sequences in accordance with patterns being different for the modulation symbol sequences and corresponding to patterns as used in a transmitting apparatus;
a plurality of demodulators (616 to 618) for demodulating each of the shifted modulation symbol sequences to a plurality of coded bit streams;
a plurality of deinterleavers (620 to 622) for deinterleaving each of the coded bit streams, in the same manner; and
a parallel-to-serial converter (624) for converting the deinterleaved coded bit streams to one coded bit stream.

6. The apparatus of claim 5, further comprising an FFT transformer (604 to 606) for converting frequency-domain signals received at the receive antennas on subcarriers via a radio channel to time-domain signals.

7. The apparatus of claim 6, further comprising a successive interference cancellation receiver (608) for prioritizing symbols received from the FFT transformer according to a predetermined rule, estimating an error of a higher-priority symbol, and estimating an error of a lower-priority symbol using the estimated error.

8. A method of transmitting signals through a plurality of transmit antennas in a mobile communication system having an encoder for encoding information bits to a coded bit stream, comprising the steps of:

converting the coded bit stream to a plurality of coded bit streams according to a number of transmit antennas;
interleaving each of the coded bit streams, stream by stream, in the same manner;
modulating each of the interleaved coded bit streams to a plurality of modulation symbol sequences;
shifting each of the modulation symbol sequences via shifting bits within the modulation symbol sequences in accordance with patterns being different for the modulation symbol sequences; and
transmitting each of the shifted modulation symbol sequences through the respective transmit antennas.

9. The method of claim 8, further comprising the step of inverse-fast-Fourier-transforming the shifted modulation symbols to frequency-domain signals to be transmitted on subcarriers via a radio channel.

10. The method of claim 9, wherein the modulation step comprises the step of using a modulation scheme in which the coded bit streams are converted to modulation symbols each having as many bits as the number of transmit antennas.

11. The method of claim 10, wherein the transmit antennas are numbered and the bits of the modulation symbols are sequentially shifted bit by bit according to the number of transmit antennas.

12. A method of receiving signals through a plurality of receive antennas in a mobile communication system having a decoder for decoding a coded bit stream to information bits, comprising the steps of:

shifting each of modulation symbol sequences received through the receive antennas via shifting bits within the modulation symbol sequences in accordance with patterns being different for the modulation symbol sequences and corresponding to patterns as used in a transmitting apparatus;
demodulating each of the shifted modulation symbol sequences to a plurality of coded bit streams;
deinterleaving each of the coded bit streams, in the same manner; and
converting the deinterleaved coded bit streams to one coded bit stream.

13. The method of claim 12, further comprising the step of fast-Fourier-transforming frequency-domain signals received at the receive antennas on subcarriers via a radio channel to time-domain signals.

**14.** The method of claim 13, further comprising the step of prioritizing symbols received from the FFT transformer according to a predetermined rule, estimating an error of a higher-priority symbol, and estimating an error of a lower-priority symbol using the estimated error.

**Patentansprüche**

**1.** Vorrichtung mit einer Kodiereinrichtung zum Kodieren von Informationsbits zu einem kodierten Bitstrom, zum Senden von Signalen über eine Vielzahl von Sendeantennen in einem Mobilkommunikationssystem, wobei sie umfasst:

einen Seriell-Parallel-Wandler (502) zum Umwandeln des kodierten Bitstroms in eine Vielzahl kodierter Bitströme gemäß einer Anzahl von Sendeantennen;
einen Interleaver (504 bis 506), der Interleaving jedes der kodierten Bitströme Strom für Strom auf die gleiche Weise durchführt;
einen Vielzahl von Modulatoren (508 bis 510) zum Modulieren jedes der Interleaving unterzogenen kodierten Bitströme zu einer Vielzahl von Modulationssymbol-Sequenzen; und
eine Vielzahl von Verschiebeeinrichtungen (512 bis 514) zum Verschieben jeder der Modulationssymbol-Sequenzen über Verschiebebits innerhalb der Modulationssymbol-Sequenzen gemäß Mustern, die für die Modulationssymbol-Sequenzen verschieden sind, und zum Senden jeder der verschobenen Modulationssymbol-Sequenzen über jeweilige Sendeantennen.

**2.** Vorrichtung nach Anspruch 1, die des Weiteren eine IFFT-Transformiereinrichtung (516 bis 518) zum Umwandeln jedes der verschobenen Modulationssymbole zu Frequenzdomänen-Signalen umfasst, die auf Teilträgern über einen Funkkanal zu senden sind.

**3.** Vorrichtung nach Anspruch 2, wobei die Modulatoren ein Modulationsschema verwenden, bei dem die kodierten Bitströme in Modulationssymbole umgewandelt werden, bei denen die Anzahl von Bits jeweils der der Sendeantennen entspricht.

**4.** Vorrichtung nach Anspruch 3, wobei die Verschiebeeinrichtungen bezüglich der Indexnummern den Sendeantennen entsprechen und die Bits der Modulationssymbole sequenziell Bit für Bit gemäß der Indexnummer der Sendeantenne verschieben.

**5.** Vorrichtung mit einer Dekodiereinrichtung zum Dekodieren eines kodierten Bitstroms in Informationsbits zum Empfangen von Signalen über eine Vielzahl von Empfangsantennen in einem Mobilkommunikationssystem, wobei sie umfasst:

eine Vielzahl von Verschiebeeinrichtungen (612 bis 614) zum Verschieben jeder der Modulationssymbol-Sequenzen, die über die Empfangsantennen empfangen werden, über Verschiebebits innerhalb der Modulationssymbol-Sequenzen gemäß Mustern, die für die Modulationssymbol-Sequenzen verschieden sind und Mustern entsprechen, wie sie in einer Sendevorrichtung verwendet werden;
eine Vielzahl von Demodulatoren (616 bis 618) zum Demodulieren jeder der verschobenen Modulationssymbol-Sequenzen zu einer Vielzahl kodierter Bitströme;
eine Vielzahl von Deinterleavern (620 bis 622), die Deinterleaving jedes der kodierten Bitströme auf die gleiche Weise durchführen; und
einen Parallel-Seriell-Wandler (624) zum Umwandeln der Deinterleaving unterzogenen kodierten Bitströme in einen kodierten Bitstrom.

**6.** Vorrichtung nach Anspruch 5, die des Weiteren eine FFT-Transformiereinrichtung (604 bis 606) zum Umwandeln von Frequenzdomänen-Signalen, die an den Empfangsantennen auf Teilträgern über einen Funkkanal empfangen werden, in Zeitdomänen-Signale umfasst.

**7.** Vorrichtung nach Anspruch 6, die des Weiteren einen Empfänger (608) für sukzessive Interferenz-Beseitigung umfasst, der von dem FFT-Transformer empfangene Symbole gemäß einer vorgegebenen Regel priorisiert, einen Fehler eines Symbols höherer Priorität schätzt und einen Fehler eines Symbols niedrigerer Priorität unter Verwendung des geschützten Fehlers schätzt.

**8.** Verfahren zum Senden von Signalen über eine Vielzahl von Sendeantennen in einem Mobilkommunikationssystem mit einer Kodiereinrichtung zum Kodieren von Informationsbits zu einem kodierten Bitstrom, das die folgenden Schritte umfasst:

Umwandeln des kodierten Bitstroms in eine Vielzahl kodierter Bitströme gemäß einer Anzahl von Sendeantennen;

Durchführen von Interleaving jedes der kodierten Bitströme, Strom für Strom, auf die gleiche Weise;

Modulieren jedes der Interleaving unterzogenen kodierten Bitströme zu einer Vielzahl von Modulationssymbol-Sequenzen;

Verschieben jeder der Modulationssymbol-Sequenzen über Verschiebebits innerhalb der Modulationssymbol-Sequenzen gemäß Mustern, die für die Modulationssymbol-Sequenzen verschieden sind; und

Senden jeder der verschobenen Modulationssymbol-Sequenzen über die jeweiligen Sendeantennen.

9. Verfahren nach Anspruch 8, das des Weiteren den Schritt des Durchführens von inverser schneller Fourier-Transformation der verschobenen Modulationssymbole zu Frequenzdomänen-Signalen umfasst, die auf Teilträgern über einen Funkkanal zu senden sind.

10. Verfahren nach Anspruch 9, wobei der Modulationsschritt den Schritt des Verwendens eines Modulationsschemas umfasst, bei dem die kodierten Bitströme in Modulationssymbole umgewandelt werden, deren Bitzahl jeweils der Anzahl von Sendeantennen entspricht.

11. Verfahren nach Anspruch 10, wobei die Sendeantennen nummeriert sind und die Bits der Modulationssymbole sequenziell Bit für Bit entsprechend der Nummer von Sendeantennen verschoben werden.

12. Verfahren zum Empfangen von Signalen über eine Vielzahl von Empfangsantennen in einem Mobilkommunikationssystem mit einer Dekodiereinrichtung zum Dekodieren eines kodierten Bitstroms zu Informationsbits, wobei es die folgenden Schritte umfasst:

Verschieben jeder Modulationssymbol-Sequenz, die über die Empfangsantennen empfangen werden, über Verschiebebits innerhalb der Modulationssymbol-Sequenzen gemäß Mustern, die für die Modulationssymbol-Sequenzen verschieden sind und Mustern entsprechen, wie sie in einer Sendevorrichtung verwendet werden;

Demodulieren jeder der verschobenen Modulationssymbol-Sequenzen zu einer Vielzahl kodierter Bitströme;

Durchführen von Deinterleaving jedes der kodierten Bitströme auf die gleiche Weise; und

Umwandeln der Deinterleaving unterzogenen kodierten Bitströme in einen kodierten Bitstrom.

13. Verfahren nach Anspruch 12, das des Weiteren den Schritt schneller Fourier-Transformation von Frequenzdomänen-Signalen, die an den Empfangsantennen auf Teilträgern über einen Funkkanal empfangen werden, zu Zeitdomänen-Signalen umfasst.

14. Verfahren nach Anspruch 13, das des Weiteren den Schritt des Priorisierens von dem FFT-Transformer empfangener Symbole gemäß einer vorgegebenen Regel, des Schätzens eines Fehlers eines Symbols höherer Priorität und des Schätzens eines Fehlers eines Symbols niedrigerer Priorität unter Verwendung des geschätzten Fehlers umfasst.

**Revendications**

1. Appareil possédant un codeur destiné à coder des bits d'information pour fournir un flux de bits codés, destiné à émettre des signaux via une pluralité d'antennes d'émission dans un système de communication mobile, comprenant :

un convertisseur série-parallèle (502), destiné à convertir le flux de bits codés en une pluralité de flux de bits codés, en fonction d'un nombre d'antennes d'émission ;

un entrelaceur (504 à 506), destiné à entrelacer chacun des flux de bits codés, flux par flux, de la même manière ;

une pluralité de modulateurs (508 à 510), destinés à moduler chacun des flux de bits codés et entrelacés pour donner une pluralité de séquences de symboles de modulation ; et

une pluralité de décaleurs (512 à 514), destinés à décaler chacune des séquences de symboles de modulation en décalant des bits à l'intérieur des séquences de symboles de modulation d'après des motifs qui sont différents pour les séquences de symboles de modulation et à émettre chacune des séquences de symboles de modulation décalés via des antennes d'émission respectives.

**2.** Appareil selon la revendication 1, comprenant en outre un transformateur par IFFT (516 à 518), destiné à convertir chacun des symboles de modulation décalés en signaux dans le domaine fréquentiel, à émettre sur des sous-porteuses via un canal radio.

**3.** Appareil selon la revendication 2, dans lequel les modulateurs utilisent un mécanisme de modulation dans lequel les flux de bits codés sont convertis en symboles de modulation ayant chacun autant de bits que le nombre des antennes d'émission.

**4.** Appareil selon la revendication 3, dans lequel les décaleurs correspondent par des numéros d'indice aux antennes d'émission et décalent séquentiellement les bits des symboles de modulation, bit par bit, en fonction du numéro d'indice de l'antenne d'émission.

**5.** Appareil possédant un décodeur destiné à décoder un flux de bits codés en bits d'information, destiné à recevoir des signaux via une pluralité d'antennes de réception dans un système de communication mobile, comprenant :

une pluralité de décaleurs (612 à 614), destinés à décaler chacune des séquences de symboles de modulation en décalant des bits à l'intérieur des séquences de symboles de modulation d'après des motifs qui sont différents pour les séquences de symboles de modulation et qui correspondent aux motifs utilisés dans un appareil d'émission ;
une pluralité de démodulateurs (616 à 618), destinés à démoduler chacune des séquences de symboles de modulation décalés pour donner une pluralité de flux de bits codés ;
une pluralité de désentrelaceurs (620 à 622), destinés à désentrelacer chacun des flux de bits codés, de la même manière ; et
un convertisseur parallèle-série (624), destiné à convertir les flux de bis codés désentrelacés en un flux de bits codés.

**6.** Appareil selon la revendication 5, comprenant en outre un transformateur par FFT (604 à 606), destiné à convertir en signaux dans le domaine temporel des signaux dans le domaine fréquentiel, reçus sur les antennes de réception sur des sous-porteuses, via un canal radio.

**7.** Appareil selon la revendication 6, comprenant en outre un récepteur à annulation successive des interférences (608), destiné à attribuer une priorité à des symboles reçus du transformateur à FFT selon une règle prédéterminée, à estimer une erreur d'un symbole de priorité haute et à estimer une erreur d'un symbole de priorité basse en utilisant l'erreur estimée.

**8.** Procédé d'émission de signaux via une pluralité d'antennes d'émission dans un système de communication mobile possédant un codeur destiné à coder des bits d'information en un flux de bits codés, comprenant les étapes consistant à :

convertir le flux de bits codés en une pluralité de flux de bits codés, en fonction d'un nombre d'antennes d'émission ;
entrelacer chacun des flux de bits codés, flux par flux, de la même manière ;
moduler chacun des flux de bits codés et entrelacés pour donner une pluralité de séquences de symboles de modulation ;
décaler chacune des séquences de symboles de modulation en décalant des bits à l'intérieur des séquences de symboles de modulation d'après des motifs qui sont différents pour les séquences de symboles de modulation ; et
émettre chacune des séquences de symboles de modulation décalés via des antennes d'émission respectives.

**9.** Procédé selon la revendication 8, comprenant en outre l'étape consistant à transformer, par une transformation de Fourier rapide inverse, les symboles de modulation décalés en signaux du domaine fréquentiel, à émettre sur des sous-porteuses via un canal radio.

**10.** Procédé selon la revendication 9, dans lequel l'étape de modulation comprend l'étape consistant à utiliser un mécanisme de modulation dans lequel les flux de bits codés sont convertis en symboles de modulation ayant chacun autant de bits que le nombre des antennes d'émission

**11.** Procédé selon la revendication 10, dans lequel les antennes d'émission sont numérotées et les bits des symboles de modulation sont décalés séquentiellement, bit par bit, selon le nombre des antennes d'émission.

12. Procédé de réception de signaux via une pluralité d'antennes de réception dans un système de communication mobile possédant un décodeur destiné à décoder un flux de bits codés en bits d'information, comprenant les étapes consistant à :

decaler chacune ces séquences de symboles de modulation en décalant des bits à l'intérieur des séquences de symboles de modulation d'après des motifs qui sont différents pour les séquences de symboles de modulation et qui correspondent aux motifs utilisés dans un appareil d'émission ;
démoduler chacune des séquences de symboles de modulation décalés pour donner une pluralité de flux de bits codés ;
désentrelacer chacun des flux de bits codés, de la même manière ; et
convertir les flux de bis codés désentrelacés en un flux de bits codés.

13. Procédé selon la revendication 12, comprenant en outre l'étape consistant à appliquer une transformation de Fourier rapide pour convertir en signaux dans le domaine temporel des signaux dans le domaine fréquentiel, reçus sur les antennes de réception sur des sous-porteuses, via un canal radio.

14. Procédé selon la revendication 13, comprenant en outre l'étape consistant à attribuer une priorité à des symboles reçus du transformateur à FFT selon une règle prédéterminée, à estimer une erreur d'un symbole de priorité haute et à estimer une erreur d'un symbole de priorité basse en utilisant l'erreur estimée.

FIG.1

FIG.2

EP 1 530 312 B1

FIG.3

FIG.4

FIG.5

EP 1 530 312 B1

600 604

608

610

612

614

616

618

620

622

624

626

602 606

FFT

FFT

SIC
RECEIVER

DE-
ORDERER

SHIFTER

SHIFTER

DEMODULATOR

DEMODULATOR

DEINTERLEAVER

DEINTERLEAVER

P/S
CONVERTER

DECODER

FIG.6

(F) | 1 | 2 | 3 | 4 | 5 | 6 | 7 | 8 | 9 | 10 | 11 | 12 | 13 | 14 | 15 | 16 | 17 | 18 | 19 | 20 |

↓

(G) | 1 | 3 | 5 | 7 | 9 | 11 | 13 | 15 | 17 | 19 |
    | 2 | 4 | 6 | 8 | 10 | 12 | 14 | 16 | 18 | 20 |

↓

(H) | 11 | 19 | 1 | 15 | 17 | 5 | 7 | 9 | 13 | 3 |
    | 12 | 20 | 2 | 16 | 18 | 6 | 8 | 10 | 14 | 4 |

(I) | 11 | 19 | 1 | 15 | 17 | 5 | 7 | 9 | 13 | 3 |
    | 20 | 12 | 16 | 2 | 6 | 18 | 10 | 8 | 4 | 14 |

(J) | 11 | 19 | 1 | 15 | 17 | 5 | 7 | 9 | 13 | 3 |
    | 20 | 12 | 16 | 2 | 6 | 18 | 10 | 8 | 4 | 14 |

(K) | 11 | 19 | 1 | 15 | 17 | 5 | 7 | 9 | 13 | 3 |
    | 12 | 20 | 2 | 16 | 18 | 6 | 8 | 10 | 14 | 4 |

(L) | 1 | 3 | 5 | 7 | 9 | 11 | 13 | 15 | 17 | 19 |
    | 2 | 4 | 6 | 8 | 10 | 12 | 14 | 16 | 18 | 20 |

(M) | 1 | 2 | 3 | 4 | 5 | 6 | 7 | 8 | 9 | 10 | 11 | 12 | 13 | 14 | 15 | 16 | 17 | 18 | 19 | 20 |

▨ : ERROR BIT

□ : NORMAL BIT

# FIG.7

2 x 2 SIC-Receiver QPSK

FIG.8

2 x 2 SIC-Receiver 64-QAM

FIG.9